# EUROPEAN PATENT APPLICATION

(11) **EP 1 339 266 A2**
(43) Date of publication of application: **27.08.2003**
(21) Application number: 02396190.7
(22) Date of filing: 20.12.2002
(51) Int. Cl.: H05B 37/02

(54) **Twilight switch**

(30) Priority: 28.12.2001 FI 20012588
(71) Applicant: Kotka Terminal Equipment OY, 48600 Karhula (FI)
(72) Inventor: Tarvonen, Kari, 48800 Karhula (FI); Harju, Heikki, 48100 Kotka (FI)
(74) Representative: Valkeiskangas, Tapio Lassi Paavali

(57) **Abstract**

The present invention relates to a twilight switch (1) for controlling the current supply of an electrical device, such as a lamp, to be turned on and off, the twilight switch comprising: a photosensor (2) for producing a measurement result (S) responsive to the surrounding light intensity level, a comparison element (3) for comparing the measurement result with a limit value (Ref), and control means (5) for controlling the current supply of the electrical device in response to the result of the comparison carried out by the comparison element. In order to make the adjustment of a twilight value of the twilight switch easy, the twilight switch (1) is arranged to change the limit value (Ref) to conform with the measurement result (S) produced by the photosensor (2) in response to a predetermined setting signal.

## Description

### FIELD OF THE INVENTION

The present invention relates to a twilight switch for controlling the current supply to an electrical device, such as a lamp, in dependence on the surrounding lighting conditions.

### BACKGROUND OF THE INVENTION

Twilight switches are typically used for controlling outdoor lamps, in which case the lamps can be switched on and off according to the real prevailing conditions (light/dark) and not, for example, at certain predetermined times.

The known twilight switches usually comprise a photosensor used by a twilight switch to produce a measurement result responsive to the surrounding light intensity level. The twilight switch compares this measurement result with a limit value which, in the known twilight switches, has been determined by a user for the twilight switch e.g. by means of a potentiometer or an adjusting switch. Depending on the result of the comparison, the twilight switch next controls the current supply of the device to be turned on or off. Twilight switches may consist of separate devices via which the current supply of an electrical device has been arranged to the electrical devices. Alternatively, twilight switches may be integrated in the actual electrical device.

The known twilight switches suffer from the disadvantage that it is relatively difficult to adjust them to a desired twilight value. In the present connection, a twilight value refers to a limit value with which a twilight switch compares a measurement result produced by its photosensor. On the basis of the result of the comparison, the twilight switch next controls the current supply of the electrical device such that e.g. a lamp is switched on when it is dark "enough". In connection with the adjustment, the user of a twilight value has to know how to estimate how much a potentiometer should be turned or to which position an adjusting switch should be set in order for the twilight value to reach the desired level. On many occasions no correct level is reached at the first time but the correct adjustment is found only after trying different positions of the potentiometer before e.g. a lamp is successfully switched on under the desired lighting conditions. Consequently, the twilight value is slow and difficult to adjust. The twilight value is particularly difficult to adjust when a large number of twilight switches are to be adjusted at one occasion such that their twilight value will be roughly the same.

### SUMMARY OF THE INVENTION

An object of the present invention is to solve the above-described problem and to provide a twilight switch wherein a twilight value is easier to adjust. A further object of the invention is to provide an easier method for setting a twilight value of a twilight switch. These objects are achieved by the twilight switch of claim 1 and the method of claim 9 for setting a twilight value of a twilight switch.

The idea underlying the invention is that a twilight value, i.e. a limit value, of a twilight switch becomes considerably faster and easier to set by using a twilight switch which, in response to a predetermined setting signal, uses as the limit value a measurement result produced by the twilight switch in response to the surrounding light intensity level.

The most important advantage of the invention is that a user is very easily and accurately able to adjust a twilight value to a desired value. To this end, it will suffice that the user waits until the surrounding lighting conditions are the desired ones, after which the user feeds a setting signal to the twilight switch. The twilight switch is then independently responsible for using a limit value corresponding with the prevailing lighting conditions at the particular moment. The invention thus enables a correct twilight value to be set in a very fast and easy manner.

Preferred embodiments of the twilight switch and method of the invention are disclosed in the attached dependent claims 2 to 8, 10 and 11.

### BRIEF DESCRIPTION OF THE DRAWINGS

In the following, the invention will be described in closer detail by way of example and by reference to the accompanying drawings, in which

Figure 1 is a block diagram showing a first preferred embodiment of a twilight switch of the invention,

Figure 2 is a block diagram showing a second preferred embodiment of the twilight switch of the invention,

Figure 3 is a flow diagram showing control carried out by the twilight switch of Figure 2, and

Figure 4 is a flow diagram showing a first preferred embodiment of a method of the invention.

### DESCRIPTION OF PREFERRED EMBODIMENTS

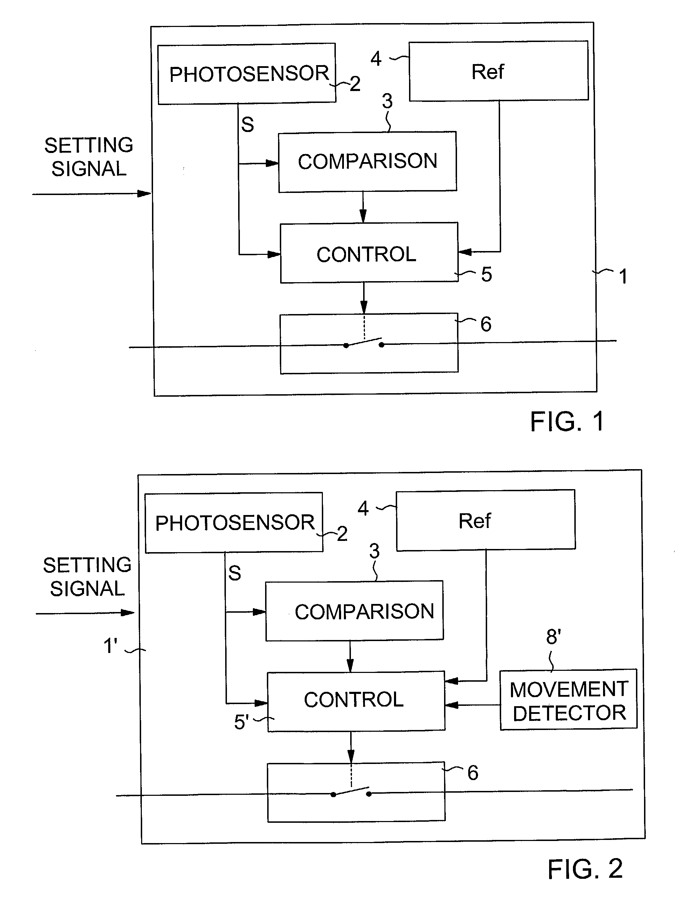

Figure 1 is a block diagram showing a first preferred embodiment of a twilight switch of the invention. The twilight switch 1 may be integrated in an electrical device or, alternatively, it may be a separate, enclosed unit via which current supply is arranged to the electrical device. The twilight switch 1 shown in Figure 1 comprises a switch 6 via which current supply is arranged to the electrical device.

A photosensor 2 of the twilight switch 1 produces a measurement signal responsive to the surrounding light intensity level. A Light Dependent Resistor (LDR), for example, can be used as the photosensor 2. Next, (after a possible necessary amplification and A/D conversion) the measurement signal is delivered to a comparison element 3 and to control means 5. If the switch is a digital twilight switch, the comparison element and the control means may in practice consist of one or more processors.

The twilight switch of Figure 1 includes a memory 4 wherein a twilight value, i.e. a limit value Ref, determined by the user in a manner to be described below is stored. The comparison element 3 is arranged to compare a measurement result S responsive to the surrounding light intensity level and the limit value Ref with each other. The control means 5 receive a signal describing the result of the comparison element 3, and the control means control a switch 6 in dependence on the result of the comparison.

When the twilight switch of Figure 1 is utilized for controlling a lamp, the aim is to make the lamp to be switched on when the surrounding light intensity level drops below a certain limit. Consequently, the control unit 5 directs the switch 6 to an electrically conducting position when the comparison element 3 indicates that the measurement result S is below the limit value Ref.

The twilight switch of Figure 1 is responsive to a predetermined setting signal, and the reception of such a signal triggers the changing of the limit value Ref. In practice, a setting signal may consist e.g. of:
- pressing of a setting button in a twilight switch,
- feeding of an external signal to a twilight switch,
- turning off current supply to a twilight switch and turning it on again according to a predetermined sequence (e.g. current supply off and on again three times within five seconds), or
- a light sequence received by means of a photosensor (e.g. such that the photosensor is subjected to light three times within five seconds by means of a flashlight).

After detecting the setting signal, the control means 5 start changing the limit value. The control means 5 then store in the memory 4 the measurement result S received from the photosensor subsequent to the setting signal as the new limit value Ref. Next, the comparison element 3 starts using the new limit value in its comparisons. Consequently, the twilight value of the twilight switch has been changed to correspond with the lighting conditions prevailing after the setting signal.

In order for the photosensor 2 of the twilight switch, such as an LDR resistor, to be calibrated, the twilight switch 1 may include a certain constant light source (e.g. a light emitting diode) focused to subject the photosensor to light. The twilight switch itself is thus capable of calibrating its photosensor at a suitable moment by utilizing the constant light source. The twilight switch may further include a temperature sensor to enable the twilight switch to take into account, in the current supply control, the prevailing temperature and the resulting changes in the tolerances of components.

Figure 2 is a block diagram showing a second preferred embodiment of the twilight switch of the invention. The twilight switch of Figure 2 is almost similar to the embodiment described in connection with Figure 1. Consequently, the embodiment of Figure 2 is described mainly by disclosing differences between the twilight switches of Figure 1 and Figure 2.

The twilight switch 1' of Figure 2 includes a movement detector 8' for enabling the twilight switch to detect the presence of a person residing in the detection area. The movement detector 8' may consist e.g. of an infrared sensor which, e.g. through a Fresnel lens, detects a person residing in the detection area on the basis of infrared radiation. In such a case, a signal produced by the infrared sensor can be amplified and filtered prior to being fed to control means 5'.

For controlling the switch 6, the control means 5' thus utilize both the result of the comparison carried out by the comparison element 3 concerning the surrounding light intensity level and the signal produced by the movement detector, on the basis of which the presence of a person is detectable. Supposing the twilight switch is expressly used for controlling a lamp, it would, as far as energy consumption is concerned, be most advantageous that the lamp be switched on only when the movement detector has detected someone within the detection area. However, such control causes the disadvantage that the lamp will be switched on and off several times as different persons enter and exit the detection area. Such frequent switching off and on again causes the lamp to wear down, thus shortening its service life. As far as the service life of a lamp is concerned, it would be most advantageous that the lamp be switched off and on again as seldom as possible. In practice, the control of the lamp thus constitutes a compromise between the above-mentioned extreme cases.

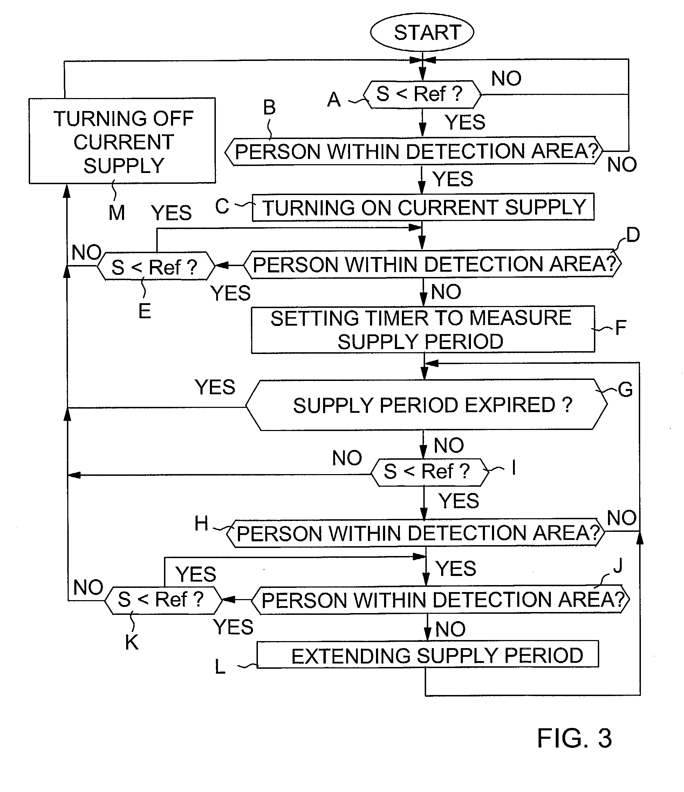

The control means of Figure 2 are arranged to control the switch 6 such that the current supply remains turned on for the duration of a certain supply period, starting from the moment when the movement detector 8' has detected that the person has exited the detection area. If, prior to the expiry of the supply period, the movement detector again detects someone within the detection area, the control means extend the supply period by a certain fixed time. After the supply period has expired and no one resides within the detection area, the control means 5' direct the switch 6 to turn off the current supply. The control implemented by the control means of the twilight switch 1' is shown in more detail in the flow diagram of Figure 3.

Figure 3 is a flow diagram showing control carried out by the twilight switch of Figure 2. It is assumed in Figure 3 that the electrical device to be controlled is a lamp to which the twilight switch supplies electric current after dark, providing that someone resides within the area of the movement detector of the twilight switch.

In block A, it is checked whether the measurement result S received from the photosensor and responsive to the surrounding light intensity level is below the twilight limit Ref determined by the user. If the measurement result is below the twilight limit, it is dark enough to switch on the lamp. A check corresponding with block A is also carried out in blocks E, I and K.

In block B, the process waits until someone enters the detection area. Next, in block C, the lamp is switched on, i.e. the current supply is turned on.

After the person has exited the detection area, i.e. the movement detector no longer detects anyone, a timer is set in block F to measure the supply period. The supply period may be provided with a predetermined initial length, e.g. eight minutes.

In blocks G, H and I, the process waits until a period of time corresponding with the supply period has passed, until it is light enough for the lamp to be switched off, or until it is detected in block H that someone has again entered the detection area.

If the new person has entered the detection area before the supply period has expired, the process waits until the person exits the detection area, after which the supply period is extended in block L. The supply period can be extended in block L e.g. such that the supply period is extended for every new person e.g. by four minutes. However, when the supply period is extended e.g. for the tenth time, the supply period is provided with a predetermined fixed value, e.g. twenty minutes, after which the supply period is no longer extended until the lamp has been switched off again.

The current supply to the lamp is turned off in block M, where the process ends up if it no longer is dark enough for the lamp to be switched on (i.e. S>Ref) or if the lamp has been switched on for a period of time corresponding with the supply period and no one resides within the detection area any longer.

As distinct from the flow diagram of Figure 3, the twilight switch may also be a twilight switch adaptively adapting itself to prevailing conditions and collecting statistics of occasions when the current supply has been turned on and occasions when it has been turned off or, alternatively, the movement detections of the movement detector. In such a case, at least two different initial lengths of the supply period may be used. A longer initial length of the supply period (e.g. fifteen minutes) is used in block F when the collected statistics show that a relatively short period of time has recently passed between occasions when the current supply has been turned off and when it has been turned on or, alternatively, between the movement detections of the movement detector (the lamp has been switched off only for a couple of minutes). Correspondingly, a shorter initial length of the supply period (e.g. eight minutes) is used in block F when the collected statistics show that a relatively long period of time has recently passed between occasions when the current supply has been turned off and when it has been turned on or, alternatively, between the movement detections of the movement detector. Such a solution enables the advantage to be achieved that e.g. during peak periods the lamp does not wear down unnecessarily due to incessant switching on and off. On the other hand, during slow periods (e.g. at night), energy consumption is minimized.

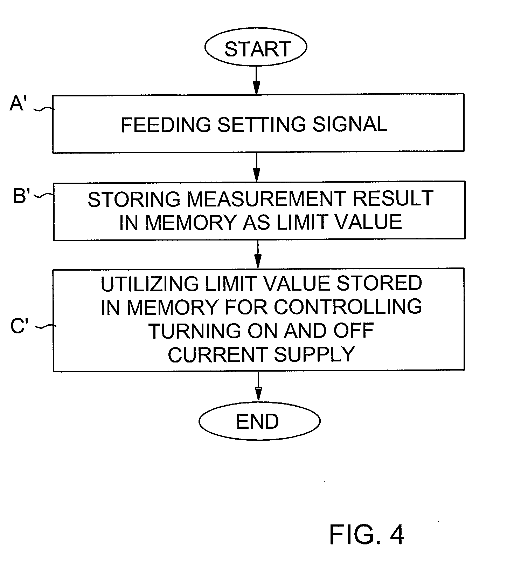

Figure 4 is a flow diagram showing a first preferred embodiment of a method of the invention. The flow diagram of Figure 4 is suitable for utilization in setting a desired twilight value for the twilight switch of Figure 1 or 2.

In block A', a predetermined setting signal is fed to the twilight switch in order to enable the twilight switch to be directed to the twilight value setting state. Depending on the implementation, the setting signal can be fed to the twilight switch e.g. by:
- pressing a button in the twilight switch,
- feeding a specific external signal concerning the feeding to the twilight switch,
- turning off the current supply of the twilight switch and turning it on again according to a predetermined sequence (e.g. current supply off and on again three times within five seconds), or
- focusing light on a photosensor following a specific light sequence (e.g. such that the photosensor is subjected to light three times within five seconds by means of a flashlight).

In block B', the measurement result produced by the twilight switch after moving over to the setting state and which is responsive to the surrounding lighting conditions is stored in the memory of the twilight switch as a limit value. Next, in block C', the new limit value stored in the memory is utilized to control the turning on and off the current supply.

It is to be understood that the above description and the related drawings are only intended to illustrate the present invention. It will be obvious to one skilled in the art that the invention can be varied and modified without deviating from the scope of the invention disclosed in the attached claims.

## Claims

1. A twilight switch (1, 1') for controlling the current supply of an electrical device, such as a lamp, to be turned on and off, the twilight switch comprising:
a photosensor (2) for producing a measurement result (S) responsive to the surrounding light intensity level,
a comparison element (3) for comparing the measurement result with a limit value (Ref), and
control means (5, 5') for controlling the current supply of the electrical device in response to the result of the comparison carried out by the comparisonelement,**characterized in that**
the twilight switch (1, 1') is arranged to change the limit value (Ref) to conform with the measurement result (S) produced by the photosensor (2) in response to a predetermined setting signal.

2. A twilight switch as claimed in claim 1, **characterized in that** the twilight switch (1, 1') comprises a switch for turning on and off the current supply of the twilight switch, and that the twilight switch is arranged to identify a setting signal fed thereto via the switch.

3. A twilight switch as claimed in claim 1, **characterized in that** the twilight switch (1, 1') is arranged to identify a setting signal fed thereto via the photosensor (2).

4. A twilight switch as claimed in any one of claims 1 to 3, **characterized in that**
the twilight switch (1') further comprises a movement detector (8') for detecting a person in the detection area of the twilight switch,
the control means (5') are also responsive to the movement detector for controlling the current supply to be turned on when the movement detector (8') has detected someone within the detection area and the measurement result (S) of the photosensor (2) is below the limit value (Ref),
the control means (5') continue the current supply for the duration of a supply period, starting from the moment when the movement detector (8') no longer detects anyone within the detection area,
the control means (5') extend the supply period by a predetermined period of time if, prior to the expiry of the supply period, the movement detector again detects someone within the detection area, and
the control means (5') control the current supply to be turned off after the supply period has expired and/or the measurement result of the photosensor exceeds the limit value.

5. A twilight switch as claimed in any one of claims 1 to 3, **characterized in that**
the twilight switch (1') further comprises a movement detector (8') for detecting a person within the detection area of the twilight switch,
the control means (5') are also responsive to the movement detector for controlling the current supply to be turned on when the movement detector (8') has detected someone within the detection area and the measurement result (S) of the photosensor (2) exceeds the limit value (Ref),
the control means (5') continue the current supply for the duration of a supply period, starting from the moment when the movement detector (8') no longer detects anyone within the detection area,
the control means (5') extend the supply period by a predetermined period of time if, prior to the expiry of the supply period, the movement detector again detects someone within the detection area, and
the control means (5') control the current supply to be turned off after the supply period has expired and/or the measurement result is below the limit value.

6. A twilight switch as claimed in claim 4 or 5, **characterized in that**
the control means (5') extend the last supply period such that the length of the supply period corresponds with a predetermined fixed time if the number of extension times of the supply periods exceeds a certain limit.

7. A twilight switch as claimed in any one of claims 4 to 6, **characterized in that** the twilight switch (1') is arranged to collect statistics of occasions when the current supply has been turned on and occasions when it has been turned off or the movement detections of the movement detector, and to adapt itself to the prevailing conditions by changing the initial length of the supply period on the basis of the collected statistics.

8. A twilight switch as claimed in claim 7, **characterized in that** the twilight switch (1') is arranged to use at least two different initial lengths of the supply period, a longer initial length being used when the time between turning off the current supply and turning on the current supply or between the movement detections of the movement detector has, on the basis of the statistics, been short, and a shorter initial length being used when the time between turning off the current supply and turning on the current supply or between the movement detections of the movement detector has, on the basis of the statistics, been long.

9. A method for setting a twilight value of a twilight switch, **characterized by**
directing the twilight switch to a twilight value setting state by delivering a predetermined setting signal to the twilight switch,
determining a limit value to be the twilight value of the twilight switch, the limit value corresponding with a measurement result produced by the twilight switch after moving over to the setting state, and
utilizing the limit value in the twilight switch for controlling the current supply to be turned on and off.

10. A method as claimed in claim 9, **characterized by** delivering the setting signal to the twilight switch by turning off and turning on again the current supply to the twilight switch according to a predetermined sequence.

11. A method as claimed in claim 9, **characterized by** delivering the setting signal to the twilight switch by focusing a photosensor of the twilight switch to be subjected to light according to a predetermined sequence.
